# EUROPEAN PATENT APPLICATION

(11) **EP 4 657 687 A1**
(43) Date of publication of application: **03.12.2025**
(21) Application number: 23924597.0
(22) Date of filing: 28.02.2023
(51) Int. Cl.: H02H 9/00

(54) **DISCHARGING MODULE, POWER ELECTRONIC DEVICE, CONTROL METHOD AND COMPUTING DEVICE**

(71) Applicant: Siemens Aktiengesellschaft, 80333 München (DE)
(72) Inventor: ZHAO, Yanfeng, Beijing 100102 (CN); LEI, Yuzhou, Beijing 100076 (CN)
(74) Representative: Isarpatent
(86) International application number: PCT/CN2023/078803
(87) International publication number: WO 2024/178625

(57) **Abstract**

The present disclosure relates to a discharging module, a power electronic device, a control method and a computing device. The discharging module comprises a discharging resistor, at least one normally closed switch, and a normally open switch, wherein the normally open switch is connected to the at least one normally closed switch in parallel, and the normally open switch and the at least one normally closed switch, which are connected in parallel, are then connected to the discharging resistor in series..

## Description

### TECHNICAL FIELD

The present disclosure generally relates to the field of circuit technologies, and more specifically, relates to a discharge module, a power electronic device, a control method, and a computing device.

### BACKGROUND

At present, power conversion systems (PCS) are widely used for energy storage, and some DC output voltages can reach 1500 V.

When the power conversion system is turned off, for safety reasons, the energy of a DC bus support capacitor should be released. The energy stored in the capacitor is very large, but the discharge time is limited.

A current solution is to connect a large resistor in parallel to the DC bus support capacitor, and the stored energy can be discharged through the resistor. The main disadvantage of this solution is power loss. Apparently, as long as the system is powered on, the discharge resistor will always consumes energy. To reduce the power loss, it is necessary to select a large resistor. This will result in a long discharge time, which is unacceptable in most cases.

A second solution is to further connect a controlled switch in series to the discharge resistor. In the normal running state of the system, the switch is turned off, and the discharge resistor does not operate. When the energy of the capacitor requires to be discharged, a control switch is turned on, such that the energy can be released. The main disadvantage of this solution is that in emergency, if all power supplies are cut off and a switch cannot be controlled to turn on, the energy in the capacitor cannot be released.

### SUMMARY

A brief overview of the present invention is provided below in order to provide a basic understanding about some aspects of the present invention. It should be understood that this overview is not an exhaustive overview of the present invention. This overview is not intended to determine a key or an important part of the present invention, nor is it intended to limit the scope of the present invention. The purpose of this overview is merely to provide certain concepts in a simplified form, with the certain concepts serving as a prelude to a more detailed description that will be discussed later.

In view of this, the present invention provides a discharge module that can be configured to discharge a DC bus support capacitor.

According to an aspect of the present disclosure, a discharge module is provided, including: a discharge resistor, at least one normally-closed switch, and one normally-open switch,
the normally-open switch being connected in parallel to the at least one normally-closed switch; and
the normally-open switch and the at least one normally-closed switch that are connected in parallel being then connected in series to the discharge resistor.

Optionally, in an example of the foregoing aspect, the normally-closed switch is a low-withstand voltage switching device, and the normally-open switch is a high-withstand voltage switching device.

According to another aspect of the present disclosure, a power electronic device is provided, including at least one DC bus support capacitor and at least one discharge module as described above,
the discharge module being connected in parallel to the DC bus support capacitor, and the discharge module being configured to discharge the DC bus support capacitor when the power electronic device is powered off.

According to another aspect of the present disclosure, a control method for the discharge module is provided, the discharge module being disposed in a power electronic device, and the method including:
when the power electronic device runs normally, turning on the normally-open switch of the discharge module first, then turning off the normally-closed switch of the discharge module, and finally turning off the normally-open switch; and
when the power electronic device is powered off, turning on the normally-open switch first, turning on the normally-closed switch, and finally turning off the normally-open switch.

According to another aspect of the present disclosure, a computing device is provided, including at least one processor; and a memory, coupled to the at least one processor, the memory being configured to store instructions that, when executed by the at least one processor, causes the at least one processor to execute the method as described above.

According to another aspect of the present disclosure, a non-transitory machine-readable storage medium storing executable instructions that, when executed, cause a machine to execute the method as described above.

According to another aspect of the present disclosure, a computer program is provided, including computer-executable instructions that, when executed, cause at least processor to execute the method as described above.

According to another aspect of the present disclosure, a computer program product is provided, tangibly stored on a computer-readable medium and including computer-executable instructions that, when executed, cause at least one processor to execute the method as described above.

According to a discharge circuit in an embodiment of the present invention, in a normal operating state, no power loss will be generated, thereby improving the energy efficiency, and when a system is abnormally powered off, a discharge resistor may be automatically turned on to discharge an energy storage capacitor, thereby improving the system safety, and the costs of the discharge circuit are very low.

### BRIEF DESCRIPTION OF THE DRAWINGS

The foregoing and other objectives, characteristics, and advantages of the present invention will be more easily understood with reference to the following descriptions of embodiments of the present invention in conjunction with the accompanying drawings. The components in the accompanying drawings are merely used for illustrating the principles of the present invention. In the drawings, same or similar technical features or components are represented by using same or similar reference numerals. In the drawings:
FIG. 1 is an exemplary circuit topology diagram of a discharge module according to an embodiment of the present invention.
FIG. 2 is an exemplary circuit topology diagram of a power conversion system according to an embodiment of the present invention.
FIG. 3 is a flowchart of an exemplary process of a control method for a discharge module according to an embodiment of the present disclosure.
FIG. 4 is an exemplary circuit topology diagram of a drive circuit.
FIG. 5 is a block diagram of a computing device that controls a discharge module according to an embodiment of the present disclosure.

Reference numerals are as follows:

| | | | |
|---|---|---|---|
| 100: | discharge module | R1: | lischarge resistor |
| KO1: | normally-open switch | KC1: | normally-closed switch |
| 200: | power conversion system | 202: | AC-DC converter |
| 204: | DC bus support capacitor | 300: | control method for discharge module |
| S302, S304: | step | 400: | drive circuit |
| 404: | first drive circuit | 406: | second drive circuit |
| 4042: | first signal isolator | 4044: | first buffer |
| 4046: | first switch driver | 402: | power supply |
| 4062: | second signal isolator | 4064: | second buffer |
| 4066: | second switch driver | 500: | computing device |
| 502: | processor | 504: | memory |

### DETAILED DESCRIPTION

A subject described in this specification is discussed now with reference to exemplary implementations. It should be understood that, discussion of these implementations is merely intended to make a person skilled in the art better understand and implement the subject described in this specification, and is not intended to limit the protection scope of the claims, the applicability, or examples. The functions and arrangements of the discussed elements can be changed without departing from the protection scope of the content of the present disclosure. Various processes or components may be omitted, replaced, or added in each example according to requirements. For example, the described method may be performed according to a sequence different from the sequence described herein, and steps may be added, omitted or combined. In addition, features described in some examples may also be combined in other examples.

As used in this specification, the term "include" and variants thereof represent open terms, and means "include but is not limited to". The term "based on" represents "at least partially based on". The terms "one embodiment" and "an embodiment" represent "at least one embodiment". The term "another embodiment" represents "at least one another embodiment". The terms "first", "second" and the like may represent different objects or the same object. Other definitions may be included explicitly or implicitly. Unless otherwise clearly specified, the definition of one term is consistent in the entire specification.

For a second solution in the prior art, it can be considered that a normally-open switch is replaced with a controlled normally-closed switch. However, it is difficult to select a normally-closed switch having high pull-in voltage and breakdown voltage, as such normally-closed switches are typically very bulky and expensive.

However, normally-open switches having a same voltage level are cost less, and there may be multiple options. For example, a relay, or a switching device (such as IGBT and MOSFET).

In view of this, the present invention provides a discharge module that can be configured to discharge a DC bus support capacitor.

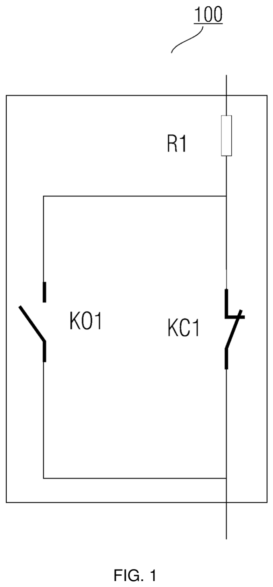

FIG. 1 shows a discharge module 100 that can be configured to discharge a DC bus support capacitor according to an embodiment of the present invention.

The discharge module 100 includes a discharge resistor R1, a normally-closed switch KC1 connected in series to the discharge resistor R1, and a normally-open switch KO1 connected in parallel to the normally-closed switch.

A low-withstand voltage switching device can be selected as the normally-closed switch, such as a relay, a contactor, or a low-withstand voltage switching transistor. A high-withstand voltage switching device can be selected as the normally-open switch, such as a relay, a contactor, or a high-withstand voltage switching transistor.

It can be understood that depending on the withstand voltage level of a selected normally-closed switch and a DC bus voltage, the normally-closed switch may be one switch, or may be multiple switches connected in series. In the discharge module according to the present invention, the number of the normally-closed switches is not limited.

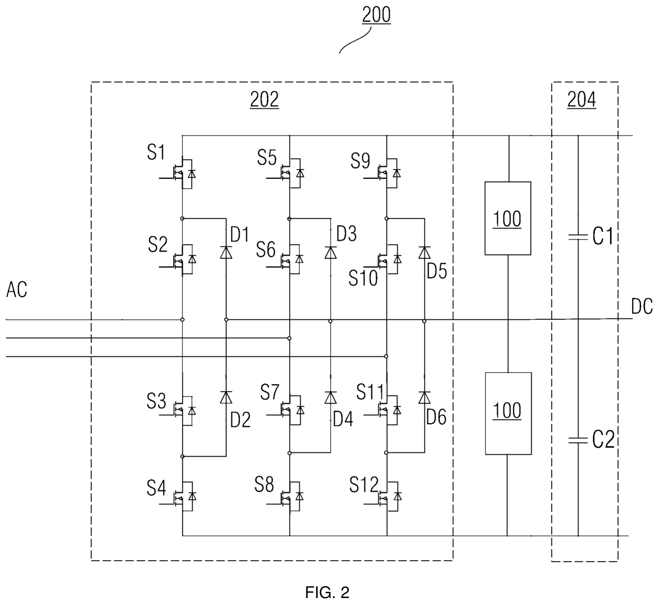

FIG. 2 shows an exemplary circuit topology diagram of a power conversion system including a discharge module according to an embodiment of the present invention.

As shown in FIG. 2, the power conversion system 200 includes an AC-DC converter 202, a DC bus support capacitor 204, and a discharge module 100.

In FIG. 2, the AC-DC converter 202 is of a three-level topology structure, the DC bus support capacitor 204 includes two DC bus support capacitors C1 and C2, and a discharge module 100 is connected to each DC bus support capacitor.

The circuit topology of the AC-DC converter shown in FIG. 2 is merely an example. A person skilled in the art may use an appropriate circuit topology of an AC-DC converter in the prior art as required. The specific structure of the circuit topology of the AC-DC converter in the power conversion system of the present invention is not limited. For example, the AC-DC converter may also be of a two-level topology structure. In this case, the power conversion system only includes one DC bus support capacitor, and a discharge module is connected in parallel to the DC bus support capacitor.

In fact, the discharge module according to the present invention can be configured to discharge a DC capacitor of any power electronic device having a DC bus support capacitor, for example, a power conversion system (PCS), an AC-DC converter, or a DC-DC converter, which will not described in detail here.

In a power electronic device employing the discharge module according to an embodiment of the present invention, in a normal operating state, the discharge module does not perform a discharge operation, and no power loss will be generated, and when the system is powered off, including when the system is powered off in emergency, the discharge module may discharge an energy storage capacitor.

The operating process of the power electronic device including the discharge module according to an embodiment of the present invention will be specifically described below.

The operating process of the power electronic device includes three states: an initial state, a running state, and a power-off state.

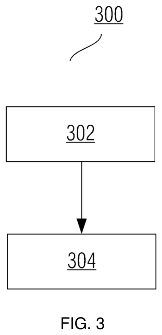

The initial state is also referred to as a power-on state in which the charge of the DC bus support capacitor is started. In the initial state, the normally-open switch KO1 is in an open state, and the normally-closed switch KC1 is in a closed state. The DC bus voltage is applied to a discharge resistor, and all switches are not subjected to a pull-in voltage. After the power electronic device enters a normal running state, the discharge module is controlled, such that the discharge module does not perform the discharge operation, so as to avoid the generation of a power loss, and during power-off, the discharge module is enabled to discharge the energy storage capacitor. The process of controlling the discharge module by the power electronic device in different states is described below in conjunction with FIG. 3.

At block S302, the power electronic device is in the normal running state, and the charge process of the DC bus support capacitor has been completed, so it is necessary to disconnect a discharge loop. As described above, the normally-closed switch is a low-withstand voltage switch. In order to reduce the voltage impact on the normally-closed switch KC1 during power-off, the normally-open switch KO1 will be controlled to turn on first, and then the normally-closed switch KC1 is controlled to turn off. In this process, the normally-closed switch will not be affected by a high voltage. After KC1 is turned off, KO1 is also turned off, such that the discharge module does not perform the discharge operation.

At block S304, the power electronic device is in the power-off state, the energy of the DC bus support capacitor requires to be discharged. Firstly, KO1 is controlled to turn on. In this case, discharge current flows through R1 and KOK, and then, KC1 and KC2 are also controlled to turn on. This process is zero-voltage turn-on, and has no impact on KC1 and KC2. In this turn-on process, part of the current gradually shifts to KC1 and KC2 branches. Finally, KO1 is controlled to turn off, and all the discharge current will be shifted to the KC1 and KC2 branches. There is no voltage impact on KC1 and KC2.

The power electronic device employing the discharge module according to an embodiment of the present invention can still automatically implement the foregoing discharge process in the power-off state even in emergency, that is, in a case in which a control part of the power electronic device cannot control a switch of the discharge module when the power electronic device is abnormally powered off.

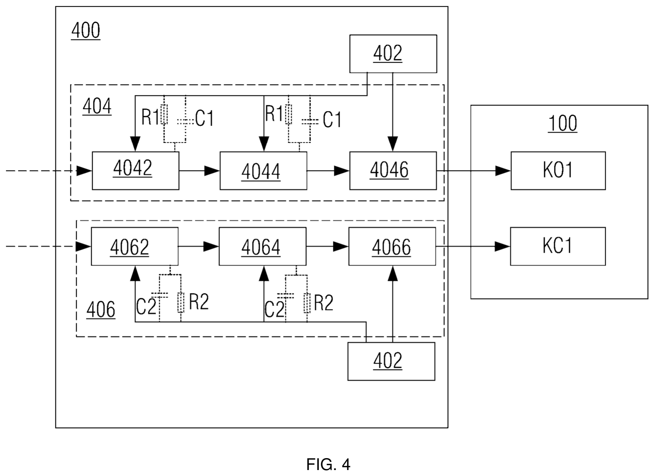

FIG. 4 shows a schematic circuit topology diagram of a drive circuit 400 for drive control over a normally-closed switch and a normally-open switch of a discharge module.

How to automatically implement the foregoing discharge process in the power-off state in emergency is described below with reference to FIG. 4.

The drive circuit 400 shown in FIG. 4 includes a power supply 402, a first drive circuit 404 configured to drive a normally-open switch KO1, and a second drive circuit 406 configured to drive a normally-closed switch KC1.

The first drive circuit 404 includes a first signal isolator 4042, a first buffer 4044, and a first switch driver 4046. The first signal isolator 4042 is configured to receive a trigger signal from the control part of the power electronic device, and isolate the control part from the discharge module. The first buffer 4044 is configured to amplify a trigger signal from an isolator. The first switch driver 4046 is configured to provide the trigger signal to the normally-closed switch KO1 for its control.

After the power electronic device is abnormally powered off, the drive circuit 400 cannot receive the trigger signal from the control part, and the power supply 402 can still remain for a period of time (for example, this can be implemented by adding a larger capacitor to the power supply).

In the drive circuit 400 according to an embodiment of the present invention, a pull-up resistor R1 and a capacitor C1 or a pull-down resistor and a capacitor (depending on whether the first switch driver requires high-level trigger or low-level trigger) are added to the first buffer 4044 or the first signal isolator 4042 of the first drive circuit 404. A trigger signal can be provided by the pull-up resistor and the capacitor or the pull-down resistor and the capacitor, and a first driver obtains the trigger signal to turn on the normally-open switch KO1. After the normally-open switch KO1 is turned on, a discharge process may start.

The structure of the second drive circuit 406 configured to drive the normally-closed switch KC1 is the same as that of the first drive circuit 404 of the normally-open switch KO1, and includes a second signal isolator 4062, a second buffer 4064, and a second switch driver 4066. A pull-up resistor and a capacitor or a pull-down resistor and a capacitor (depending on whether the second switch driver requires high-level trigger or low-level trigger) is also added to the second buffer 4064 or the second signal isolator 4062 of the second drive circuit 406. The operating mode of the second drive circuit 406 is also similar to that of the first drive circuit 404, except that parameters of a resistor and a capacitor are different. Since the normally-open switch KO1 needs to be turned on first, followed by turning on the normally-closed switch KC1, a time constant (R2*C2) of the second drive circuit of the normally-closed switch KC1 should be greater than a time constant (R1*C1) of the first drive circuit. After a period of time, the power supply 402 can no longer provide enough power for the drive circuit, and the normally-closed switch KO1 is turned off due to loss of a holding trigger signal. The normally-open switch KC1 remains in a turn-on state. The discharge operation can be continued until the energy of all DC bus support capacitors in the discharge resistor is dissipated.

The drive circuit shown in FIG. 4 is only an exemplary circuit topology diagram for drive control over a discharge module according to the present disclosure. A person skilled in the art may select a drive circuit of an appropriate topology as required, as long as the operation of turning on the normally-open switch first, then turning on the normally-closed switch, and finally turning off the normally-open switch when the power electronic device is powered off can be implemented to control the discharge module.

According to a discharge circuit in an embodiment of the present invention, in a normal operating state, no power loss will be generated, thereby improving the energy efficiency, and when a system is abnormally powered off, a discharge module may be automatically turned on to discharge an energy storage capacitor, thereby improving the system safety, and the costs of the discharge circuit are very low.

As described above, referring to FIG. 3, the control method for the discharge module in the power electronic device according to an embodiment of the present disclosure is described.

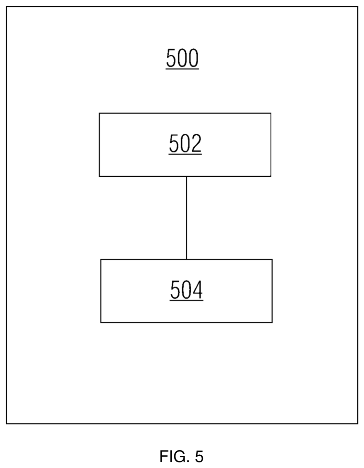

FIG. 5 is a block diagram of a computing device 500 that controls a discharge module in a power electronic device according to an embodiment of the present disclosure. According to an embodiment, the computing device 500 may include at least one processor 502, and the processor 502 executes at least one computer-readable instruction (that is, the foregoing elements implemented in the form of software) stored or encoded in a computer-readable storage medium (i.e., a memory 504).

In an embodiment, computer-executable instructions are stored in the memory 504, and the computer-executable instructions, when executed, enable at least one processor 502 to complete operations executed by a control apparatus.

It should be understood that the computer-executable instructions stored in the memory 504, when executed, cause the at least one processor 502 to perform the various operations and functions described in the foregoing various embodiments of the present disclosure in conjunction with FIG. 3.

According to an embodiment, a non-transitory machine-readable medium is provided. The non-transitory machine-readable medium may have machine-executable instructions (i.e., the foregoing elements implemented in the form of software), and the instructions, when executed by a machine, cause the machine to execute various operations and functions described in the foregoing embodiments of the present disclosure in conjunction with FIG. 3.

According to an embodiment, a computer program is provided, including computer-executable instructions that, when executed, cause at least one processor to execute various operations and functions described in the foregoing embodiments of the present disclosure in conjunction with FIG. 3.

According to an embodiment, a computer program product is provided, including computer-executable instructions that, when executed, cause the at least one processor to execute various operations and functions described in the foregoing embodiments of the present disclosure in conjunction with FIG. 3.

Exemplary embodiments are described above in combination with specific implementations illustrated in the accompanying drawings, but this does not represent all embodiments that may be implemented or fall within the protection scope of the claims. A term "exemplary" used in the entire specification means "used as an example, an instance, or an illustration", and does not mean "preferred" or "superior" over other embodiments. To provide an understanding of the described technologies, the specific implementations include specific details. However, these technologies may be implemented without these specific details. In some embodiments, to avoid confusing the concept of the described embodiments, a well-known structure and apparatus are shown in a block diagram form.

The descriptions of the content of the present disclosure are provided to allow any person of ordinary skill in the art to implement or use the content of the present disclosure. Various modifications to the content of the present disclosure will be obvious to those skilled in the art. In addition, a general principle defined herein can be applied to other variants without departing from the protection scope of the content of the present disclosure. Therefore, the content of the present disclosure is not limited to the examples and designs described in this specification, but is consistent with the widest range conforming to the principle and novelty disclosed in this specification.

The foregoing is only a preferred embodiment of the present invention and is not used to limit the present invention. Any modification, equivalent replacement, or improvement made within the spirit and principle of the present invention shall fall within the protection scope of the present invention.

## Claims

1. A discharge module (100), comprising: a discharge resistor (R1), at least one normally-closed switch (KC1), and one normally-open switch (KO1),
the normally-open switch (KO1) being connected in parallel to the at least one normally-closed switch (KC1); and
the normally-open switch (KO1) and the at least one normally-closed switch (KC1) that are connected in parallel being then connected in series to the discharge resistor (R1).

2. The discharge module (R1) according to claim 1, wherein the normally-closed switch (KC1) is a low-withstand voltage switching device, and the normally-open switch (KO1) is a high-withstand voltage switching device.

3. A power electronic device (200), comprising at least one DC bus support capacitor (204) and at least one discharge module (100) according to claim 1 or 2,
the discharge module (100) being connected in parallel to the DC bus support capacitor (204), and the discharge module (100) being configured to discharge the DC bus support capacitor (204) when the power electronic device (200) is powered off.

4. A control method (300) for the discharge module according to claim 1 or 2, the discharge module being disposed in the power electronic device, and the method comprising:
when the power electronic device operates normally, turning on the normally-open switch of the discharge module first, then turning off the normally-closed switch of the discharge module, and finally turning off the normally-open switch (S302); and
when the power electronic device is powered off, turning on the normally-open switch first, then turning on the normally-closed switch, and finally turning off the normally-open switch (S304).

5. A computing device (500), comprising:
at least one processor (502); and
a memory (504), coupled to the at least one processor (502), the memory being configured to store instructions that, when executed by the at least one processor (502), cause the at least one processor (502) to execute the method according to claim 4.

6. A non-transitory machine-readable storage medium, storing executable instructions that, when executed, cause a machine to execute the method according to claim 4.

7. A computer program product, tangibly stored on a computer-readable medium and comprising computer-executable instructions that, when executed, cause at least one processor to execute the method according to claim 4.
